# EUROPEAN PATENT APPLICATION

(11) **EP 4 700 623 A1**
(43) Date of publication of application: **25.02.2026**
(21) Application number: 24195088.0
(22) Date of filing: 19.08.2024
(51) Int. Cl.: G06F 21/57, H04L 9/40

(54) **AN EXPOSURE MANAGEMENT SYSTEM AND A METHOD FOR EXPOSURE MANAGEMENT**

(71) Applicant: WithSecure Corporation, 00180 Helsinki (FI)
(72) Inventor: PALUMBO, Paolo, 00180 HELSINKI (FI); KOMASHINSKIY, Dmitriy, 00180 HELSINKI (FI)
(74) Representative: Berggren Oy

(57) **Abstract**

An exposure management system and an exposure management method for assessing exposure of assets of an organization, the assets comprising at least one host (101, 205a - 205h), such as a computer or a server (102, 202). The method comprises creating a model of the organization controlling the assets, creating models of plurality of threat actors able to attack the assets of the organization, producing a reduced set of threat actors relevant for the organization based on the relevance of a specific threat actor to the organization in view of the created threat actor models and the created model of the organization. The method further comprises, for each threat actor of the reduced set of threat actors, determining available attack paths for the assets of the organization with an attack path simulator and combining the determined available attack paths for the assets of the organization to attack trees for a specific threat actor.

## Description

### Technical Field

The present invention relates to an exposure management system, and a method for exposure management.

### Background

Security and threat detection systems for computers and computer networks are used to detect threats and anomalies in computers and computer networks. Examples of such systems are Endpoint Protection Platform (EPP), Endpoint Detection & Response (EDR) and Managed Detection and Response (MDR) products and services. An endpoint protection platform (EPP) is a solution deployed on endpoint devices to prevent file-based malware attacks and to detect malicious activity. Also, EDR systems focus on the detection and monitoring of a breach as it occurs and helps to determine how best to respond the detected breach. EDR systems also provide the investigation and remediation capabilities needed to respond to dynamic security incidents and alerts. MDR in turn is a managed cybersecurity service providing service for threat detection, response, and remediation. The growth of efficient and robust threat detection solutions has been made possible in part by the emergence of machine learning, big data and cloud computing.

In the recent years, also vulnerability management systems have become more widely used. These systems primarily focus on identifying and addressing vulnerabilities within an organization's IT infrastructure, applications, and systems. Vulnerability systems can for example systematically scan, assess, and prioritize vulnerabilities to determine which pose the greatest risk to the organization. Based on this information the vulnerability management system can e.g. patch existing vulnerabilities and thus reduce the attack surface by proactively identifying and mitigating vulnerabilities before they can be exploited by attackers. Risk management and evaluation can be taken further with Exposure Management systems which not only take care of analyzing vulnerabilities but also analyze other factors that contribute to the organization's risk exposure, such as threat landscape, business impact, and effectiveness of security controls.

One method which can be used by an exposure management system is attack path mapping. Attack path mapping focuses on understanding potential attack pathways and security weaknesses by leveraging the knowledge of the TTPs (Tactics, Techniques and Procedures) that attackers could use to compromise an organization's systems and data. Attack path mapping can involve identifying and analyzing the various entry points, vulnerabilities, and attack vectors that attackers could exploit to achieve their objectives. The goal of attack path mapping is to gain insights into the organization's attack surface and identify potential weaknesses and security gaps that could be exploited by attackers.

Current exposure management systems are not able to prioritize well different parts of the exposure of the organization and especially not the risk of the different parts of the exposure to that specific organizations. Thus, with the information provided by the current exposure management systems, it's difficult to guide organizations to prioritize their operations so that the organizations would at first pay attention to what really matters to them. For this reason, more efficient and reliable exposure management systems are needed. The availability of such systems is becoming increasingly critical, considering the ongoing growth of the threat landscape and the shortage of cyber security talent that has been plaguing the industry for the last few years.

### Summary

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

According to a first aspect, the invention relates to a method, e.g. a computer implemented method, for assessing exposure of assets of an organization, the assets comprising at least one host, such as a computer or a server. The method comprises creating a model of the organization controlling the assets, creating models of plurality of threat actors able to attack the assets of the organization, producing a reduced set of threat actors relevant for the organization based on the relevance of a specific threat actor to the organization in view of the created threat actor models and the created model of the organization. The method further comprises, for each threat actor of the reduced set of threat actors, determining available attack paths for the assets of the organization with an attack path simulator, combining the determined available attack paths for the assets of the organization to attack trees for a specific threat actor.

In one embodiment of the invention the determined attack trees of one threat actor are combined to an attack forest, which attack forest comprises the determined attack trees of one threat actor.

In one embodiment of the invention the attack forests of all threat actors are combined to an attack path map of the assets of the organization representing an attack surface of the organization, such as a global attack surface of the organization.

In one embodiment of the invention the attack trees and/or the attack forests are used for prioritizing the threat actors and/or for prioritizing the addressing of identified findings, such as vulnerabilities and/or misconfigurations. In one embodiment of the invention the attack forest inherits the same priority as the corresponding threat actor.

In one embodiment of the invention the model of a threat actor comprises at least one of the following information relating to the threat actor: affiliation of the threat actor, expertise of the threat actor, location of the threat actor and/or gain expectations of the threat actor. In one embodiment of the invention the information related to a threat actor is received from a threat intelligence source, such as a threat intelligence feed and/or a threat intelligence database, e.g. an internal threat intelligence database and/or an external threat intelligence database.

In one embodiment of the invention the threat actors are included in the reduced set of threat actors relevant for the organization if their relevance for the organization meets the criteria determined by the threat actor model of a specific threat actor and the model of the organization.

In one embodiment of the invention the threat actor model and the organizational model are overlayed for producing a reduced set of threat actors that are relevant for the organization wherein the overlaying comprises prioritizing the threat actors through threat intelligence data.

In one embodiment of the invention the relevance of the threat actor to the organization is at least in part based on the information relating to the threat actor, such as affiliation of the threat actor, expertise of the threat actor, location of the threat actor and/or gain expectations of the threat actor.

In one embodiment of the invention the model of a threat actor and/or model of the organization comprises a list of behavior of the threat actors and/or organization and/or rules of behavior of the threat actors and/or organization, such as actions doable by a threat actor e.g. in the form of deterministic rules, stochastic models, such as Markov chains.

In one embodiment of the invention creating the model of the organization comprises collecting at least one of the following data relating to the customer organization: location, sector, income, staff, relevant security incidents and reports, size of the organization, market segment, geographical location. In one embodiment of the invention the data for creating the model of the organization is collected by at least one of the following: an agent installed to at least one host, an EPP agent and/or sensor installed to at least one host, an XDR agent and/or sensor installed to at least one host, a vulnerability management system, a security posture system, such as a cloud security posture system, an identity reputation database.

In one embodiment of the invention determining an attack tree with the attack path simulator comprises identifying a target asset and defining it as a root node of the attack tree, identifying attack paths which are available for the attacker for accessing the target asset, e.g. based at least in part on the determined vulnerabilities of the host and/or the network.

According to a second aspect, the invention relates to an exposure management system for assessing exposure of assets of an organization, the assets comprising at least one host, such as a computer or a server. The system is configured to create a model of the organization controlling the assets, to create models of plurality of threat actors able to attack the assets of the organization, to produce a reduced set of threat actors relevant for the organization based on the relevance of a specific threat actor to the organization in view of the created threat actor models and the created model of the organization. The system is further configured, for each threat actor of the reduced set of threat actors, to determine available attack paths for the assets of the organization with an attack path simulator, and to combine the determined available attack paths for the assets of the organization to attack trees for a specific threat actor.

In one embodiment of the invention the exposure management system is configured to carry out a method according to any embodiment of the invention.

According to a third aspect, the invention relates to a computer program comprising instructions which, when executed by a computer, cause the computer to carry out a method according to the invention.

According to a fourth aspect, the invention relates to a computer-readable medium comprising the computer program according to the invention.

With the solution of the invention, it's possible to guide organizations effectively into paying attention to what really matters to them, e.g. to prioritize remediation of the riskiest vulnerabilities of their assets which prioritization is determined based on this specific organization and relevant threat actors to this organization. For this reason, by utilizing the solution of the invention, more reliable prioritization can be made for the exposure and vulnerabilities and thus the assets of the organization can be protected faster and more reliably than with the prior art solutions. More efficient and surgical prioritizations are critical to combat the growth in number of cyber security vulnerabilities, IT misconfigurations and similar problems and the ongoing shortage of skilled workforce that would inevitably need to triage, validate and action against the many security challenges that organizations face.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated.

Furthermore, it is to be understood that the use of "a" or "an", i.e. a singular form, throughout this document does not exclude a plurality.

### Brief description of the drawings

The embodiments of the invention are illustrated by way of example, and not by way of limitation, in the figures of the accompanying drawings.
- Figure 1: presents schematically an example network architecture of one embodiment of the invention.
- Figure 2: presents schematically an example network architecture of one embodiment of the invention.
- Figure 3: presents schematically at least some components of the threat detection solution of one embodiment of the invention.
- Figure 4: presents an example method according to one embodiment of the invention.
- Figure 5: presents an example computing device, such as a server, according to one embodiment of the invention.

### Detailed description

An exposure management system according to one embodiment of the invention may comprise at least one endpoint and a backend system comprising at least one backend server. In this case information, e.g. threat detection related data and/or exposure related data, can be shared between the endpoints and/or between the endpoints and the backend system. A threat detection system can comprise the exposure management system or service or be connected to the exposure management system or service.

With the solution of the invention the exposure of a resource, e.g. an asset, can be determined and based on that the exposure of a system, a network, or a part of these can be managed. In exposure management a stream of raw data collected from multiple sources can be processed for shaping and maintaining asset inventories and further analysed for addressing the awareness aspect e.g. via collecting asset inventory variations and general properties of assets, shaping e.g. their vulnerability scopes and postures, scoring reputations of for example public assets, supply chain providers, Al providers, etc. Based on this for example an awareness summary can be created which can e.g. go through threat landscape enrichment for assessing readiness via dynamic risk scoring, prioritizing risk remediation activities for per-asset and combined planes.

The exposure management can for example provide at least one of the following output: e.g. risk remediation priorities per an asset, combined asset risk remediation priority and dynamic risk score.

Attack path mapping can be used in exposure management as one possible way of analysing e.g. a network environment. Attack path mapping can involve identifying and analyzing the various entry points, vulnerabilities, and attack vectors that attackers could exploit to achieve their objectives. Determining possible attack paths may involve asset identification, threat modeling, vulnerability analysis, and path analysis.

The exposure management system can be used with EPP-, EDR- or other corresponding systems which deploy data collectors or processing units, such as agents or sensors, on selected network endpoints, which can be any elements of IT infrastructure. Typically agents of EPP-system can focus on endpoint protection and thus on data processing while agents of EDR-system can focus on detection functions and thus on data collection. The data collectors observe activities happening at the endpoint and then send the collected data to a central, backend system, often located in the cloud. In these systems, when the backend receives data, the data can be processed (e.g. aggregated and enriched) before being analyzed and scanned by the security system provider for signs of security breaches and anomalies. The data collected with the solution of the invention may be stored in a database or similar model for information storage for further use.

Threat detection components used in the solution of the invention can comprise for example processing or analysis services, external data sources and/or internal data sources. Processing or analysis services can comprise at least one of the following: static parsers, dynamic parsers, antivirus engines, EDR/MDR rule engines, EDR/MDR Al-based engines. External data sources can comprise at least one of the following: a domain search database, a virus database, a virus information source. Internal data sources can comprise at least one of the following: a threat intelligence information source, an incident information source, an asset information source. The threat detection components may comprise (in addition to or instead of the earlier components) at least one of the following components: a data source, a data collection agent, a data aggregation and normalization component: a data storage, an analysis engine, alerting and notification component, user interface component, reporting and logging component, an incident response tool, an integration tool, a machine learning algorithm, and an Al-algorithm, a rule engine, a scalability and/or redundancy unit, a threat intelligence feed.

The components can be specialized mechanisms responsible for carrying out different types of actions including (but not limited to): querying reputation services and metadata lookup databases, parsing composite objects (e.g., installer packages, emails, web pages, documents), analyzing obtained contents (like executables, process dumps, texts, images), obtaining behavioral data (e.g., via emulation and sandboxing facilities) and deciding on the collected facts, enriching awareness summary by threat landscape information, image tagging, sentiment analysis, machine translation, spell checking and identifying obfuscated data summarizing results of the analysis. The components can for example serve specialized, well formulated tasks, e.g. in cases where the use of a large language model is not feasible.

In one embodiment of the invention the at least one threat detection component carries out actions relating to prioritizing potential treatments for an identified threat and/or security posture improvements. In one embodiment of the invention an output of the threat detection component relates to at least one of the following: identified vulnerability, identified critical asset, priority of identified vulnerability, priority of critical asses, risk values for business of the identified asset and/or vulnerability, attack path mapping, visualization and reporting artifact.

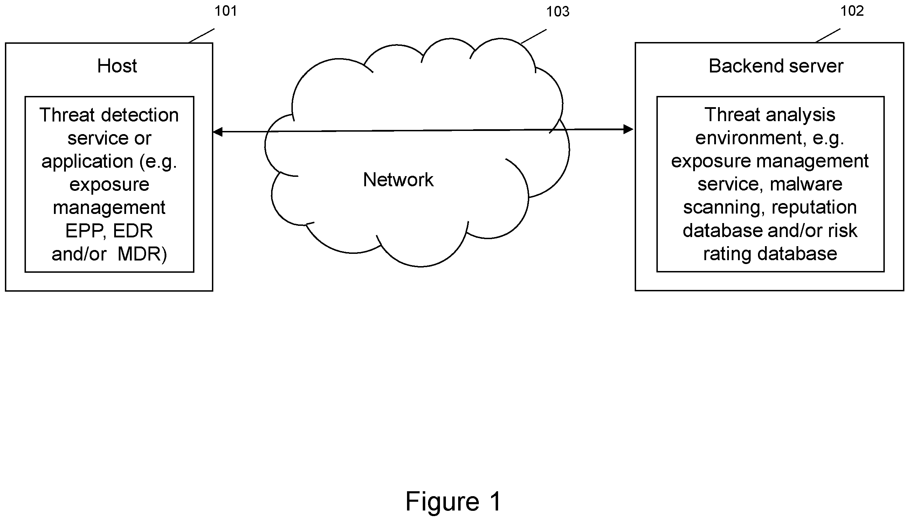

Figure 1 presents an example environment in which the solution of the invention can be used. In the solution of Figure 1 a system configuration is presented in which a local host 101 and a remote entity or server 102 are connected via a network 103. Here, the host 101 exemplifies any computer or communication system, including a single device, a network node or a combination of devices, on which malware scanning or collection of threat detection related information is to be performed. The scanning and/or analysis of the threat detection related data, or exposure management related activities can be done at the host and/or at the server. For example, the host 101 may include a personal computer, a personal communication device, a network-enabled device, a client, a firewall, a mail server, a proxy server, a database server, or the like. The server 102 exemplifies any computer or communication system, including a single device, a network node or a combination of devices, on which malware scanning or threat detection data analysis can be performed for the host 101, or which can provide data for the host 101 required to carry out the malware scanning or threat detection related analysis at the host, such as risk rating and/or reputation data. For example, the server 102 may include a security entity or a backend entity of a security provider, or the like, and the server 102 may be realized in a cloud implementation or the like. For example, the server can control exposure management process and/or the host can carry out tasks related to exposure management, e.g. as instructed by the server 102.

According to exemplifying embodiments of the invention, malware scanning and/or threat detection data analysis at the host 101 and/or by the server 102 can be realized using a malware analysis environment, such as a virtual machine or emulator environment, arranged at the host and/ or at the server. For example, an agent or a sensor, such as a malware scanning agent or sensor, e.g. a threat detection software, can be installed/arranged at the host 101 to be used for exposure management, malware scanning and/or threat detection data analysis. In one embodiment of the invention a sensor or agent at the computer is used to allow to intercept a file, to determine a system configuration value and/or network operations called by the application. The sensor can be used to observe operation of the device, such as a computer, and information collected by the sensor can be used to detect malicious behavior of an application, a file and/or a process, and/or to detect possible vulnerabilities and/or misconfigurations.

In one embodiment of the invention the threat detection environment, service and/or software can detect starting and closing of applications, all unusual processes and attach monitoring to the required applications and processes. Also, when the services are started early, the service is able to detect and follow most of user's application. In one embodiment of the invention, when the threat detection software or service is started up, it can perform running application inventory.

The network 103 exemplifies any computer or communication network, including e.g. a (wired or wireless) local area network like LAN, WLAN, Ethernet, or the like, a (wired or wireless) wide area network like WiMAX, GSM, UMTS, LTE, or the like, and so on. Hence, the host 101 and the server 102 can but do not need to be located at different locations. For example, the network 103 may be any kind of TCP/IP-based network. Insofar, communication between the host 101 and the server 102 over the network 103 can be realized using for example any standard or proprietary protocol carried over TCP/IP, and in such protocol the malware scanning agent at the host 101 and the malware analysis sandbox or application at the server 102 can be represented on/as the application layer.

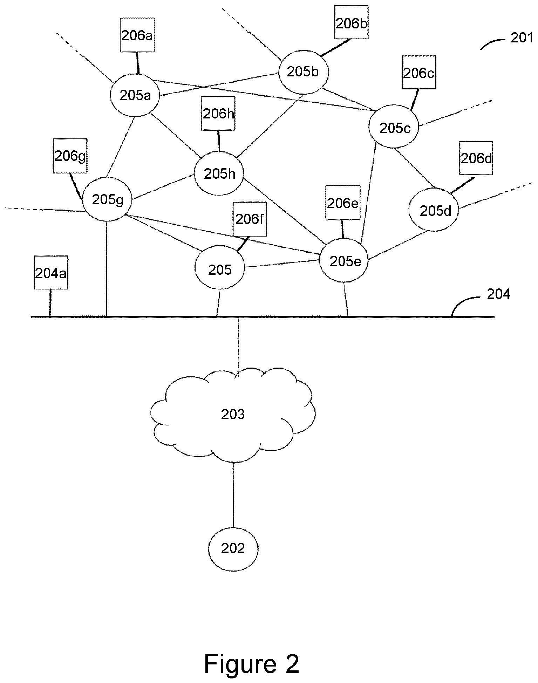

Figure 2 presents schematically an example network architecture of one embodiment of the invention in which the solution of the invention can be used. In Figure 2 a part of a first local computer network 201 is schematically illustrated into which a computer system, for example an EPP, an EDR and/or an exposure management system, has been installed. Also, any other computer system that is able to implement the embodiments of the invention can be used instead or in addition to the EPP, EDR and/or exposure management system used in this example. The first local computer network is connected to a security service network, in one embodiment a security backend system or server 202, through a network 203. The network can be similar as the network 103 in Figure 1. The backend system or server 202 can be similar as the server 102 of Figure 1. The backend system or server 202 can form a node on the security service computer network relative to the first local computer network. The security service computer network can be managed by a threat detection and/or exposure management system provider and may be separated from the network 203 by a gateway or other interface (not shown) or other network elements appropriate for the backend 202. The first local computer network 201 may also be separated from the network 203 by a gateway 204 or other interface. Other network structures are also possible.

The first local computer network 201 may be formed of a plurality of interconnected network nodes 205a - 205h, each representing an element in the first local computer network 201 such as a computer, smartphone, tablet, laptop, or other piece of network enabled hardware. In one embodiment of the invention the node is any device on the network but not a gateway. Each network node 205a - 205h shown in the first local computer network can also represent an endpoint, e.g. an EDR endpoint or EPP endpoint, onto which security agent module 206a - 206h, that may include a data collector or sensor, is installed. The network nodes 205a - 205h can be similar as the local host 101 of Figure 1. The security agent module may also be installed in some embodiments of the invention on any other element of the computer network, such as on the gateway or other interface. In the example of Figure 2 a security agent module 204a has been installed on the gateway 204. The security agent modules, 206a - 206h, 204a collect various types of data at the nodes 205a - 205h or gateway 204 including, for example, program or file hashes, files stored at the nodes 205a - 205h, logs of network traffic, process logs, binaries or files carved from memory (e.g. DLL, EXE, or memory forensics artefacts), and/or logs from monitoring actions executed by programs or scripts running on the nodes 205a - 205h or gateway 204 (e.g. TCP dumps). The data collected may be stored in a database or similar model for information storage for further use and/or sent to for further analysis. Any kind of threat detection models may further be constructed at the backend/server 202, and/or at a second server and be stored in the database. The nodes 205a - 205h and the server 202 typically comprise a hard drive, a processor, and RAM.

Any type of data which can assist in exposure management or in detecting and monitoring a security threat, such as a security breach or intrusion into the system, may be collected by the security agent modules 206a - 206h, 204a during their lifecycle and that the types of data which are observed and collected may be set according to rules defined by the threat detection system provider upon installation of the threat detection system and/or when distributing components of a threat detection model. In an embodiment, a suspicious or malicious event among the monitored events and/or a misconfiguration and/or a vulnerability may be detected by one or more detection mechanisms used. In an embodiment, the detection mechanisms used to detect the suspicious or malicious event may comprise using a machine learning model, a scanning engine, a heuristic rule, a statistical anomaly detection, a fuzzy logic-based model, predetermined rules.

In an embodiment of the present invention, at least part of the security agent modules 206a - 206h may also have capabilities to make decisions on the types of data observed and collected themselves. For example, the security agent modules 206a - 206h, 204a may collect data about the behavior of programs running on an endpoint and can observe when new programs are started. Where suitable resources are available, the collected data may be stored permanently or temporarily by the security agent modules 206a - 206h, 204a at their respective network nodes or at a suitable storage location on the first local computer network 201 and/or sent further. For example, the server 202 can control exposure management process and/or the network nodes 205a - 205h and/or security agent modules 206a - 206h can carry out tasks related to exposure management, e.g. as instructed by the server 202.

The security agent modules 206a - 206h, 204a are set up such that they send information such as the data they have collected or send and receive instructions to/from the threat detection system and/or exposure management backend 202 through the network 203, such as internet. This allows the threat detection system provider to remotely manage the system without having to maintain a constant human presence at the organization which administers the first local computer network 201.

In one embodiment of the invention, the security agent modules 206a - 206h, 204a can also be configured to establish an internal network, e.g. an internal swarm intelligence network, that comprises the security agent modules of the plurality of interconnected network nodes 205a - 205h of the local computer network 201. As the security agent modules 206a - 206h, 204a collect data related to the respective network nodes 205a - 205h of each security agent modules 206a - 206h, 204a, they are further configured to share information that is based on the collected data in the established internal network. In one embodiment a swarm intelligence network is comprised of multiple semi-independent security nodes (security agent modules) which are capable of functioning on their own as well. Thus, the numbers of instances in a swarm intelligence network may well vary. There may also be more than one connected swarm intelligence networks in one local computer network, which collaborate with one another.

The security agent modules 206a - 206h, 204a and/or the backend system can be further configured to use the collected data and information received from the internal network for exposure management related activities and/or e.g. generating and adapting models related to the respective network node 205a - 205h and/or its users.

To be able to analyze the threats and exposure of the organization or network it's important to consider what kind of threat actors can target the organization. Usually threat actors can have some preferred types of organizations they target. The matter of the preference of the threat actors can depend on a variety of factors, e.g. including threat actors' affiliation, expertise, location, gain expectations, etc. In practice, this may lead in a tendency to use specialized attack infrastructures, to focus on targeting specific vulnerabilities, to use concrete Tactics, Techniques and Procedures (TTPs), and, hence, malware implants and other tools.

On the other hand, e.g. governmental and commercial organizations operate in specific circumstances, stipulated by their missions, objectives, sectors, locations, business processes, key assets, personnel and so on. Every organization's Information and Communication Technology (further referred to as ICT) setting depends on the foregoing circumstances. From exposure management perspective, this means that a threat actor targeting an organization is likely to have an own set of preferred scenarios to break in that depend on threat actor's modus operandi and organization's visibility and its ICT's state.

In a scenario like this, it becomes extremely challenging to guide organizations effectively into paying attention to what really matters to them. The solution of the invention is able to take this into account. With one embodiment of the invention a prioritized set of attack forests can be formed or determined, each specific for a particular threat actor and relevant for the organization. Within the attack forest, a prioritized set of attack trees can be formed or determined e.g. with the use of threat intelligence, threat actor model and organizational information. With the solution of the invention the end users and organizations can thus be given the ability to combat and deal with specific threat actors effectively and the ability to uniquely observe, analyze and prioritize actions to improve their global attack surfaces from threat actors.

In the solution of the invention exposure of assets of an organization are assessed, the assets comprising at least one host, such as a computer or a server. The method comprises creating a model of the organization controlling the assets, creating models of plurality of threat actors able to attack the assets of the organization, producing a reduced set of threat actors relevant for the organization based on the relevance of a specific threat actor to the organization in view of and/or based on the created threat actor models and the created model of the organization. The method further comprises, for each threat actor of the reduced set of threat actors, determining available attack paths for the assets of the organization with an attack path simulator, combining the determined available attack paths for the assets of the organization to attack trees for a specific threat actor.

In one embodiment of the invention the determined attack trees of one threat actor are combined to an attack forest, which attack forest comprises at least part of the determined attack trees of one threat actor. In one embodiment of the invention the attack forests of all threat actors can be combined to an attack path map of the assets of the organization representing attack surface of the organization. The attack trees and/or the attack forests can be used for prioritizing the threat actors and/or for prioritizing the addressing of identified findings, such as vulnerabilities and/or misconfigurations. In one embodiment of the invention the attack forest can inherit the same priority as the corresponding threat actor. The findings, e.g. the vulnerabilities and/or misconfigurations, can be fixed and/or patched and misconfigurations can be corrected with correct and safe configurations and settings. In one embodiment of the invention the vulnerabilities can be fixed and/or patched and misconfigurations can be corrected in the order of the determined priorities.

In one embodiment of the invention the reduced set of threat actors is formed by including in the reduced ser of threat actors those threat actors that fulfill the predefined criteria for the specific organization, e.g. the threat actors which are relevant for the organization are included to the reduced set of threat actors and/or the threat actors that are not relevant for the organization are left out from the reduced set of threat actors. For example, the threat actor is included in the reduced set of threat actors if the relevance of that threat actor for the organization meets the criteria determined by the threat actor model of that specific threat actor and the model of the organization. In one embodiment of the invention the threat actor model and the organizational model are overlayed for producing a reduced set of threat actors that are relevant for the organization wherein the overlaying can comprise prioritizing the threat actors through threat intelligence data.

In one embodiment of the invention the relevance of the threat actor to the organization is at least in part based on the information relating to the threat actor, such as affiliation of the threat actor, expertise of the threat actor, location of the threat actor and/or gain expectations of the threat actor.

The model of a threat actor can comprise at least one of the following information relating to the threat actor: affiliation of the threat actor, expertise of the threat actor, location of the threat actor and/or gain expectations of the threat actor. Information related to a threat actor can be received for example from a threat intelligence feed and/or a threat intelligence database, such as an internal threat intelligence database and/or an external threat intelligence database. In one embodiment of the invention the model of a threat actor and/or model of the organization comprises a list and/or rules of behavior of the threat actors and/or organization, such as actions doable by a threat actor e.g. in the form of deterministic rules, stochastic models, such as Markov chains.

In one embodiment of the invention creating the model of the organization comprises collecting at least one of the following data relating to the customer organization: location, sector, income, staff, relevant security incidents and reports, size of the organization, market segment, geographical location. Information or data for creating the model of the organization can be collected e.g. by at least one of the following: an agent installed to at least one host, an EPP sensor and/or an agent installed to at least one host, an XDR sensor and/or agent installed to at least one host, a vulnerability management system, a security posture system, such as a cloud security posture system, an identity reputation database.

In one embodiment of the invention determining an attack tree with the attack path simulator comprises identifying a target asset and defining it as a root node of the attack tree, identifying attack paths which are available for the attacker for accessing the target asset, e.g. based at least in part on the determined vulnerabilities of the host and/or the network.

In one embodiment of the invention building an attack tree can comprise identifying a target host and defining it as a root node of the attack tree. Building the attack three can continue by identifying the specific goal an attacker could have. For example, the goal could be to gain unauthorized access to a system, tamper with data, or cause a denial-of-service (DoS) attack. Building the attack tree can continue with creating the root node of the attack tree, representing the identified goal e.g. with using a descriptive keyword or phrase as the label for the root node, and identifying attack paths which are available for the attacker, e.g. because of determined vulnerabilities, for accessing the target host. Different attack paths an attacker could follow to reach the goal can be identified. These paths represent a series of steps an attacker might take to exploit vulnerabilities. For each attack path, child nodes can be created connected to the root node. For each attack path, the attack path can further be subdivided into smaller attack trees or sub-attack trees. These sub-attack trees can represent individual elements, actions, or vulnerabilities that an attacker may exploit. In one embodiment of the invention this step is repeated recursively until a level of detail is reached that provides enough granularity for analysis. For each node in the attack tree, specific attack techniques, strategies, or vulnerabilities that an attacker could utilize, or exploit can be added. This can help to identify potential weaknesses in the system and highlight areas requiring additional protection. The attack tree can be analyzed to assess the likelihood and impact of each attack path. This analysis can allow the user or organization to prioritize risks, identify critical vulnerabilities, and plan appropriate countermeasures.

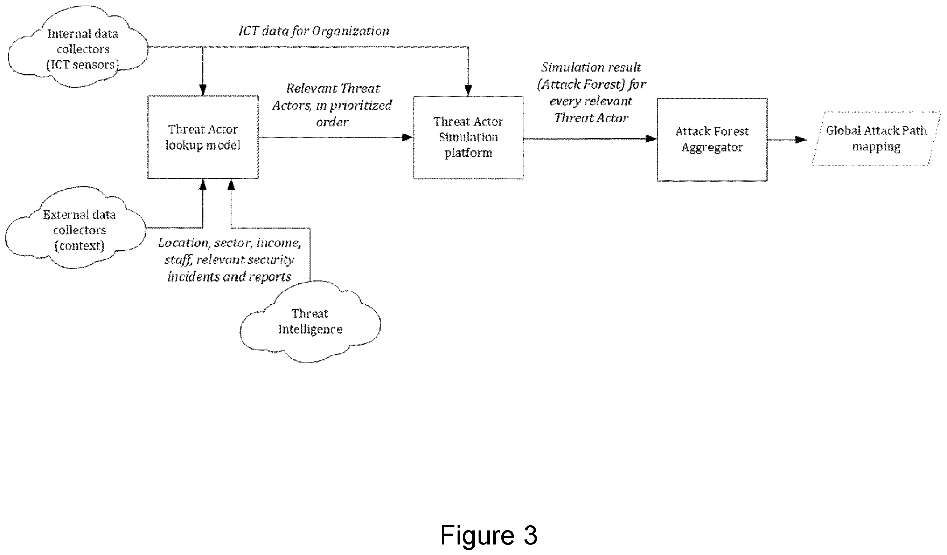

Figure 3 presents one example embodiment of the invention. In the solution of the invention internal and external threat intelligence can be used with a model of threat actor behavior to build a list of modeled threat actors. The model of threat actor's behavior may be represented in a variety of way, such as deterministic rules, stochastic models, such as Markov chains, and/or a set of Drools rules representing attackers' common actions.

Context surrounding a customer organization and data can be collected by technical tools and this collected information can be used to build an organizational model. Examples of context for a customer organization may include, but are not limited to, size of the organization, market segment, geographical location, main language, e.g. as explained above. Data collected by technical tools can refer to data from the customer organization produced by tools deployed into the organization, e.g. threat detection tools.

A reduced set of threat actors that are relevant for the organization in question are produced, e.g. by overlaying the threat actor data model and the organizational model (Threat Actor Lookup model at Fig.3). The set of threat actors produced in this step can be prioritized through threat intelligence information. For each of the threat actors (e.g. only for relevant threat actors and/or for the reduced set of threat actors) all available attack paths can be collected, e.g. via threat actor simulation platform. The simulated attack paths can then be combined in attack trees and furthermore assembled into attack forests. The set of attack forests can be used by the customer, user and/or the organization to actionably improve their security posture by surgically fighting back on specific threat actors. Through the aggregation of the attack forests, a global view (e.g. an aggregated attack forest) can be built. This can allow the end user to maintain visibility into their whole attack surface.

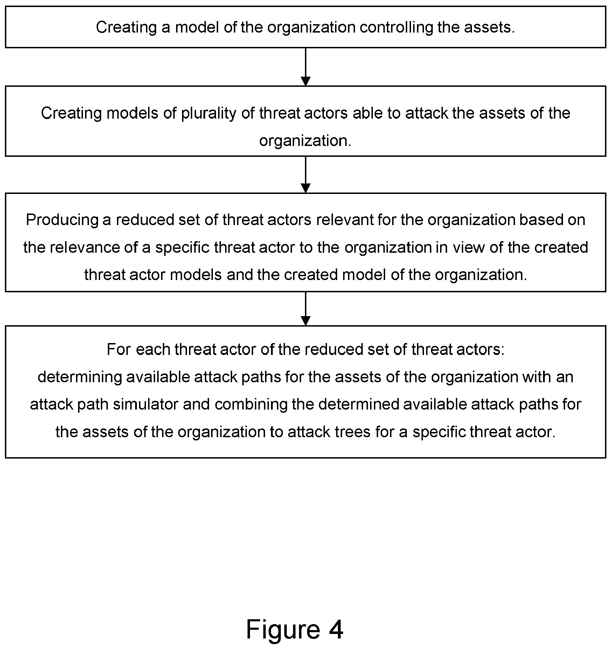

Figure 4 presents an example method according to one embodiment of the invention. In the example method a model of the organization controlling the assets is created and models of plurality of threat actors able to attack the assets of the organization are created and/or determined. A reduced set of threat actors relevant for the organization are produced based on the relevance of a specific threat actor to the organization in view of the created threat actor models and the created model of the organization. The method further comprises, for each threat actor of the reduced set of threat actors, determining available attack paths for the assets of the organization with an attack path simulator and combining the determined available attack paths for the assets of the organization to attack trees for a one specific threat actor.

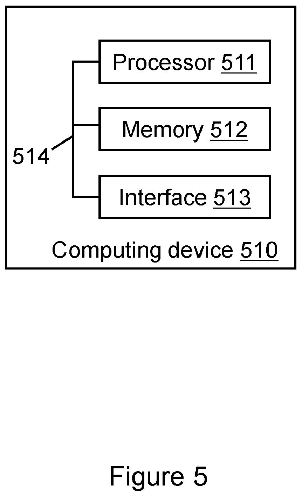

Figure 5 presents an example computing device, such as a host, an endpoint and/or a server, according to one embodiment of the invention. The computing device 510 may, for example, represent a local entity or host 101 in Figure 1, or may represent a remote entity or server 102 in Figure 1. The computing device 510 may be configured to perform a procedure and/or exhibit a functionality as described in any one of Figures 1 to 4.

The computing device may comprise at least one processor 511 and at least one memory 512 (and possibly also at least one interface 513), which may be operationally connected or coupled, for example by a bus 514 or the like, respectively. The processor 511 of the computing device 510 is configured to read and execute computer program code stored in the memory 512. The processor may be represented by a CPU (Central Processing Unit), a MPU (Micro Processor Unit), etc., or a combination thereof. The memory 512 of the computing device 510 is configured to store computer program code, such as respective programs, computer/processor-executable instructions, macros or applets, etc. or parts of them. Such computer program code, when executed by the processor 511, enables the computing device 510 to operate in accordance with exemplifying embodiments of the present invention. The memory 512 may be represented by a RAM (Random Access Memory), a ROM (Read Only Memory), a hard disk, a secondary storage device, etc., or a combination of two or more of these. The interface 513 of the computing device 510 is configured to interface with another computing device and/or the user of the computing device 510. That is, the interface 513 may represent a communication interface (including e.g. a modem, an antenna, a transmitter, a receiver, a transceiver, or the like) and/or a user interface (such as a display, touch screen, keyboard, mouse, signal light, loudspeaker, or the like).

According to some embodiments of the present invention, an electronic file can be analyzed, e.g. for malware, the electronic file including a runnable/executable part, such as any kind of application file. Insofar, exemplifying embodiments of the present invention are applicable to any such electronic file, including for example a file of an Android Application Package (APK), a Portable Executable (PE), a Microsoft Windows Installer (MSI) or any other format capable of distributing and/or installing application software or middleware on a computer.

In an embodiment, further actions, e.g. changing settings of the computers or other network nodes, may be taken to secure the computer or the computer network when a malicious file, application, activity, vulnerability and/or a misconfiguration has been detected. Changing the settings may include, for example, one or more nodes (which may be computers or other devices) being prevented from being switched off in order to preserve information in RAM, a firewall may be switched on at one or more nodes to cut off the attacker immediately, network connectivity of one or more of the network nodes may be slowed down or blocked, suspicious files may be removed or placed into quarantine, logs may be collected from network nodes, sets of command may be executed on network nodes, users of the one or more nodes may be warned that a threat or anomaly has been detected and that their workstation is under investigation, and/or a system update or software patch may be sent from the security backend to the nodes, and/or a misconfiguration can be corrected. In one embodiment of the invention one or more of these actions may be initiated automatically.

Although the invention has been described in terms of preferred embodiments as set forth above, it should be understood that these embodiments are illustrative only and that the claims are not limited to those embodiments. Those skilled in the art will be able to make modifications and alternatives in view of the disclosure which are contemplated as falling within the scope of the appended claims. Each feature disclosed or illustrated in the present specification may be incorporated in the invention, whether alone or in any appropriate combination with any other feature disclosed or illustrated herein. Lists and groups of examples provided in the description given above are not exhaustive unless otherwise explicitly stated.

## Claims

1. An exposure management method for assessing exposure of assets of an organization, the assets comprising at least one host (101, 205a - 205h), such as a computer or a server (102, 202), wherein the method comprises:
creating a model of the organization controlling the assets,
creating models of plurality of threat actors able to attack the assets of the organization,
producing a reduced set of threat actors relevant for the organization based on the relevance of a specific threat actor to the organization in view of the created threat actor models and the created model of the organization,
and for each threat actor of the reduced set of threat actors:
determining available attack paths for the assets of the organization with an attack path simulator,
combining the determined available attack paths for the assets of the organization to attack trees for a specific threat actor.

2. A method according to claim 1, wherein the attack trees of one threat actor are combined to an attack forest, which attack forest comprises attack trees of one threat actor.

3. A method according to claim 1 or claim 2, wherein the attack forests of all threat actors are combined to an attack path map of the assets of the organization representing an attack surface of the organization, such as a global attack surface of the organization.

4. A method according to any previous claim, wherein the attack trees and/or the attack forests are used for prioritizing the threat actors and/or for prioritizing the addressing of identified findings, such as vulnerabilities and/or misconfigurations,
and/or wherein the attack forest inherits the same priority as the corresponding threat actor.

5. A method according to any previous claim, wherein the model of a threat actor comprises at least one of the following information relating to the threat actor: affiliation of the threat actor, expertise of the threat actor, location of the threat actor and/or gain expectations of the threat actor, and/or
the information related to a threat actor is received from a threat intelligence source, such as a threat intelligence feed and/or a threat intelligence database, e.g. an internal threat intelligence database and/or an external threat intelligence database.

6. A method according to any previous claim, wherein the threat actors are included in the reduced set of threat actors relevant for the organization if their relevance for the organization meets the criteria determined by the threat actor model of a specific threat actor and the model of the organization.

7. A method according to any previous claim, wherein the threat actor model and the organizational model are overlayed for producing a reduced set of threat actors that are relevant for the organization wherein the overlaying comprises prioritizing the threat actors through threat intelligence data.

8. A method according to any previous claim, wherein the relevance of the threat actor to the organization is at least in part based on the information relating to the threat actor, such as affiliation of the threat actor, expertise of the threat actor, location of the threat actor and/or gain expectations of the threat actor.

9. A method according to any previous claim, wherein the model of a threat actor and/or model of the organization comprises a list of behavior of the threat actors and/or organization and/or rules of behavior of the threat actors and/or organization, such as actions doable by a threat actor e.g. in the form of deterministic rules, stochastic models, such as Markov chains.

10. A method according to any previous claim, wherein creating the model of the organization comprises collecting at least one of the following data relating to the customer organization: location, sector, income, staff, relevant security incidents and reports, size of the organization, market segment, geographical location, and/or
wherein the data for creating the model of the organization is collected by at least one of the following: an agent installed to at least one host (206a - 206h), an EPP sensor and/or agent installed to the at least one host, an XDR sensor and/or agent installed to the at least one host, a vulnerability management system, a security posture system, such as a cloud security posture system, an identity reputation database.

11. A method according to any previous claim, wherein determining an attack tree with the attack path simulator comprises:
identifying a target asset and defining it as a root node of the attack tree,
identifying attack paths which are available for the attacker for accessing the target asset, e.g. based at least in part on the determined vulnerabilities of the host (101, 205a - 205h) and/or the network (201).

12. An exposure management system for assessing exposure of assets of an organization, the assets comprising at least one host (101, 205a - 205h), such as a computer or a server (102, 202), wherein the system is configured to:
to create a model of the organization controlling the assets,
to create models of plurality of threat actors able to attack the assets of the organization,
to produce a reduced set of threat actors relevant for the organization based on the relevance of a specific threat actor to the organization in view of the created threat actor models and the created model of the organization,
and for each threat actor of the reduced set of threat actors:
to determine available attack paths for the assets of the organization with an attack path simulator, and
to combine the determined available attack paths for the assets of the organization to attack trees for a specific threat actor.

13. An exposure management system wherein the exposure management system is configured to carry out a method according to any claim 2-11.

14. A computer program comprising instructions which, when executed by a computer, cause the computer to carry out the method according to any of claims 1 - 11.

15. A computer-readable medium comprising the computer program according to claim 14
